# EUROPEAN PATENT APPLICATION

(11) **EP 1 032 173 A2**
(43) Date of publication of application: **30.08.2000**
(21) Application number: 00103791.0
(22) Date of filing: 23.02.2000
(51) Int. Cl.: H04L 27/26

(54) **Frequency offset correction in multicarrier receivers**

(30) Priority: 24.02.1999 JP 4677299
(71) Applicant: MATSUSHITA ELECTRIC INDUSTRIAL CO., LTD., Kadoma-shi, Osaka 571-8501 (JP)
(72) Inventor: Uesugi, Mitsuru, Yokosuka-shi, Kanagawa 238-0048 (JP)
(74) Representative: Grünecker, Kinkeldey, Stockmair & Schwanhäusser Anwaltssozietät

(57) **Abstract**

Frequency rotators (A) 209 to (C) 211 change the frequency of a baseband signal with respective change amounts different from each other. FFT calculators (A) 212 to (C) 214 execute FFT processing on respective baseband signals of which the frequencies are changed respectively in frequency rotators (A) 209 to (C) 211. Quality detector 216 detects qualities of FFT calculation results in FFT calculators (A) 212 to (C) 214. Decider 217 decides the FFT calculation result of which the quality is excellent among the FFT calculation results in the FFT calculators, based on the detected result in quality detector 216. Decider 217 calculates a frequency offset using the change amount corresponding to the FFT calculation result of which the quality is decided excellent based on the decided result in quality detector 216.

## Description

### BACKGROUND OF THE INVENTION

### Field of the Invention

The present invention relates to a frequency offset correction apparatus to be provided in a communication apparatus in, for example, an OFDM (Orthogonal Frequency Division Multiplexing) system, and a frequency offset correction method used in the communication apparatus in, for example, the OFDM system

### Description of the Related Art

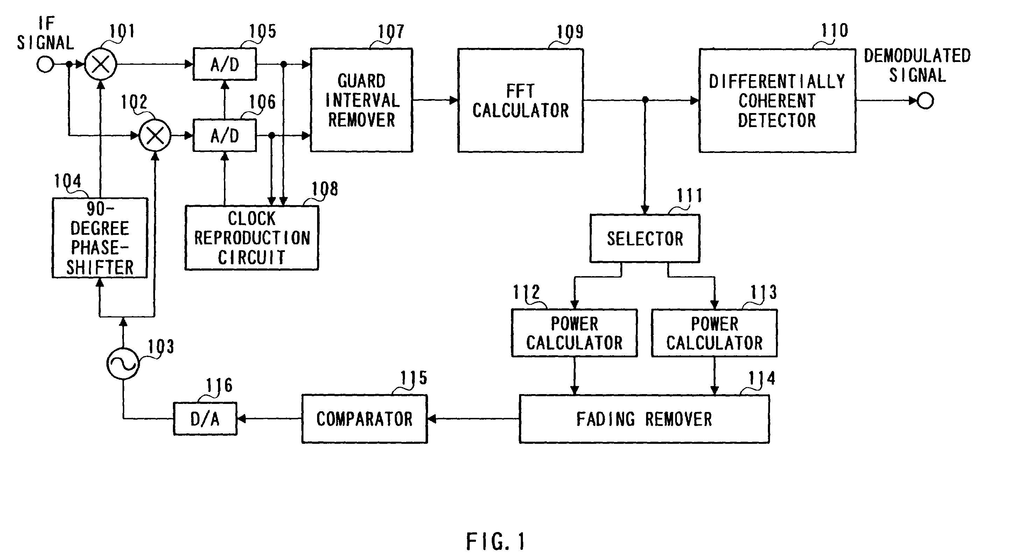

There has been a following apparatus conventionally as a data reception apparatus in the OFDM system. A conventional reception apparatus in the OFDM system is explained below with reference to FIG.1.

In FIG.1, an IF (intermediate frequency) signal is outputted to multipliers 102 and 101 to be multiplied respectively by a sine wave outputted from VCXO (Voltage Controlled Crystal Oscillator) 103 and the sine wave subjected to phase shifting in 90-degree phase-shifter 104. Thus, an I (in-phase) component and a Q (quadrature) component of a baseband signal are extracted respectively from multipliers 102 and 101.

The extracted I and Q components of the baseband signal are subjected to sampling respectively in A/D converters 105 and 106. The sampled I and Q components of the baseband signal are outputted to guard interval remover 107 and clock reproduction circuit 108.

In clock reproduction circuit 108, a sampling clock is reproduced using the sampled I and Q components of the baseband signal. The reproduced sampling clock is outputted to A/D converters 105 and 106.

On the other hand, in guard interval remover 107, a guard interval is removed from the sampled baseband signal, and the resultant signal is outputted to FFT (Fast Fourier Transform) calculator 109. In FFT calculator 109, the baseband signal from which the guard interval is removed is converted into a parallel signal sequence, subjected to FFT calculation to be converted into signals on a frequency axis, and further converted into a serial signal sequence.

The signal subjected to FFT calculation is outputted to differentially coherent detector 110 and selector 111. In differentially coherent detector 110, the FFT calculated signal is subjected to detection processing, and a demodulated signal is obtained. In selector 111, a signal transmitted with a predetermined subcarrier and that transmitted with a subcarrier accompanying the predetermined subcarrier are selected from the FFT calculated signal, and respectively outputted to power calculators 112 and 113.

In power calculators 112 and 113, respectively, the power of the signal transmitted with the selected subcarrier and that transmitted with the subcarrier accompanying the selected subcarrier are calculated, and each of the calculated power is outputted to fading remover 114. In fading remover 114, effects due to frequency selective fading are removed from each calculated power. Each calculated power from which the effects are removed is outputted to comparator 115.

In comparator 115, the power from which the effects due to frequency selective fading are removed is compared to each other. Thus, the frequency difference between the local frequency at a transmission side apparatus and that at a reception side apparatus is estimated. The estimated frequency difference (hereinafter referred to as "frequency offset value) is converted into an analog signal (voltage) by D/A converter 116, and outputted to VCXO 103 previously described. The oscillation frequency of VCXO 103 is controlled by the analog signal from D/A converter 116. The correction for the frequency difference (frequency offset correction) is thus performed.

As described above, it is possible also in the conventional reception apparatus in the OFDM system to detect the frequency difference to correct.

However, there have been the following problems in the conventional reception apparatus in the OFDM system that performs the above-described frequency offset correction.

First, in order to enable the apparatus to correct the above-described frequency difference, a lot of overheads are necessary. In other words, the ratio of added information other than effective data to the whole transmission data becomes large. Therefore, in the data transmission such as packet transmission, the transmission efficiency is largely decreased.

Further, in the case where the characteristic of a received signal such as S/N ratio deteriorates, fluctuations occur between the offset values estimated for each symbol. Therefore, in order to perform the correction for the frequency difference (introduction of correct frequency) accurately, it is necessary to use an averaged value of the frequency offset values estimated during a certain interval. AS a result, it takes a relatively long time to perform the introduction of correct frequency, and it is not possible to demodulate the received signal until the introduction is completed. In other words, the demodulation rate of the received signal always varies corresponding to the excellence of the characteristic of the received signal.

### SUMMARY OF THE INVENTION

The present invention is carried out in view of the foregoing, and an object of the present invention is to provide a frequency offset correction apparatus which improves transmission efficiency and demodulation rate.

This object is achieved by changing a frequency of a baseband signal obtained from a received signal to a plurality of frequencies to set change frequencies, measuring a quality of a demodulated signal with each of the change frequencies, selecting a change frequency for use in frequency offset using the quality measured results, and detecting the frequency offset using the change frequency. Further, this object is achieved by changing the frequency of the baseband signal obtained from the received signal to a plurality of frequencies to set changed frequencies, subjecting a demodulated signal with each of the change frequencies to frequency shift, fetching an interpolation curve by multiplexing each frequency-shifted signal to interpolate, and detecting the frequency offset using the interpolation curve.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram illustrating a configuration of a conventional reception apparatus in an OFDM system;
FIG.2 is a block diagram illustrating a configuration of a reception apparatus provided with a frequency offset correction apparatus according to a first embodiment of the present invention;
FIG.3 is a block diagram illustrating a configuration of a reception apparatus provided with a frequency offset correction apparatus according to a fourth embodiment of the present invention;
FIG.4 is a block diagram illustrating a configuration of a reception apparatus provided with a frequency offset correction apparatus according to a fifth embodiment of the present invention;
FIG.5 is a block diagram illustrating a configuration of a reception apparatus provided with a frequency offset correction apparatus according to a sixth embodiment of the present invention;
FIG.6 is a block diagram illustrating a configuration of a reception apparatus provided with a frequency offset correction apparatus according to a seventh embodiment of the present invention;
FIG.7 is a block diagram illustrating an example of a configuration of an interpolator used in a frequency offset correction apparatus according to the seventh embodiment of the present invention;
FIG.8 is a block diagram illustrating a configuration of an interpolator used in a frequency offset correction apparatus according to an eighth embodiment of the present invention;
FIG.9 is a block diagram illustrating an example of a configuration of an interpolator used in a frequency offset correction apparatus according to a ninth embodiment of the present invention;

### DETAILED DESCRIPTION OF THE PREFERRED EMBODIMENTS

Embodiments of the present invention will be described specifically below with reference to accompanying drawings.

### (First embodiment)

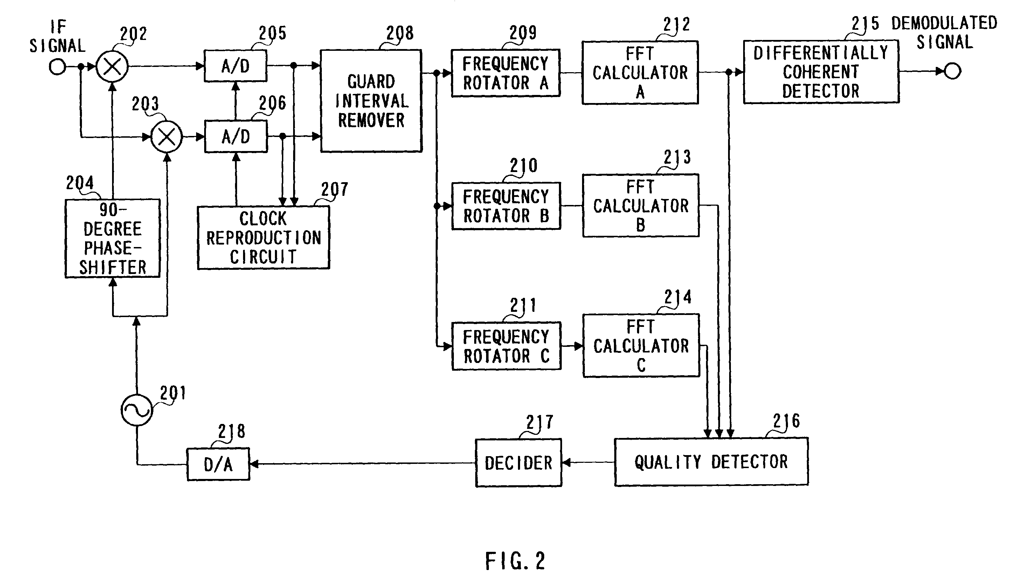

FIG.2 is a block diagram illustrating a configuration of a reception apparatus provided with a frequency offset correction apparatus according to the first embodiment of the present invention. In addition, in this embodiment, an OFDM system is explained as an example of a transmission system to be used.

In FIG.2, Voltage Controlled Crystal Oscillator (hereinafter referred to as "VCXO") 201 generates a sine wave based on a local frequency determined by the control of D/A converter 218 described late, and outputs the generated sine wave to 90-degree phase-shifter 204 and multiplier 203. 90-degree phase-shifter 204 shifts a phase of the sine wave outputted from VCXO 201 by 90 degrees to output to multiplier 202.

An intermediate-frequency signal (hereinafter referred to as "IF signal") is inputted to multipliers 202 and 203. In addition, the IF signal is a signal obtained by subjecting a signal received through an antenna (not shown) to predetermined processing such as downconverting.

Multiplier 202 extracts a baseband signal (Q component) by multiplying the IF signal by the 90-degree shifted sine wave, and outputs the extracted baseband signal to A/D converter 205. Multiplier 203 extracts a baseband signal (I component) by multiplying the IF signal by the sine wave outputted from VCXO 201, and outputs the extracted baseband signal to A/D converter 206.

A/D converters 205 and 206 respectively perform sampling of the baseband signals from multipliers 202 and 203 according to a timing reproduced in clock reproduction circuit 207, and output sampled baseband signals to guard interval remover 208.

Guard interval remover 208 outputs a signal obtained by removing a guard interval from the sampled baseband signal (I component and Q component) to a plurality of frequency rotators. In addition, this embodiment explains, as an example, the case where three of frequency rotators (A) 209 to (C) 211 are used.

Frequency rotators (A) 209 to (C) 211 each provides one of frequency rotations different from each other to the baseband signal from which the guard interval is removed, and outputs the baseband signal provided with the respective frequency rotation to FFT calculator (A) 212, (B) 213 or (C) 214 respectively. In addition, the details of frequency rotators (A) 209 to (C) 211 are described later.

FFT calculator (A) 212 to (C) 214 each subjects the baseband signal provided with the respective different frequency rotation to FFT calculation, and outputs the FFT calculated result to quality detector 216. Further, FFT calculator (A) outputs the FFT calculated result to differentially coherent detector 215. Differentially coherent detector 215 outputs a demodulated signal by executing differentially coherent detection processing on the FFT calculated result outputted from FFT calculator (A).

Quality detector 216 detects a quality of each of the FFT calculated results respectively outputted from FFT calculators (A) 212 to (C) 214. In addition, the details of quality detector 216 are described later. Further, quality detector 216 outputs a detected result to decider 217.

Decider 217 outputs a frequency offset value to D/A converter 218 based on the quality of each of the calculated results in FFT calculators (A) 212 to (C) 214.

D/A converter 218 converts the frequency offset value from decider 217 into an analog signal to output to VCXO 201.

Herein, the frequency offset correction is explained. Generally, as an error between a local frequency at a transmission side apparatus and that at a reception side apparatus becomes smaller, the accuracy of a demodulated signal obtained at the reception side apparatus becomes excellent. However, a transmission signal, which is transmitted from the transmission side apparatus and received at the reception side apparatus, is given various effects such as fading by being transmitted through a transmission path. Accordingly, the reception side apparatus needs to correct the local frequency in the quasi-coherent detection.

Further, the accuracy of the VCXO generating the local frequency generates a fluctuation of accuracy depending on the Voltage Controlled Crystal Oscillator to be used. Therefore, although the local frequency of the transmission side apparatus is broadcast to the reception side apparatus, it is necessary to consider the error between the accuracy of the VCXO of the transmission side apparatus and that of the VCXO of the reception side apparatus besides the above-described effects such as fading, in order to acquire a correct demodulated signal.

Then, the frequency offset correction apparatus according to this embodiment corrects a frequency difference (hereinafter referred to as "frequency offset") caused by the above-described factors.

Operations of the reception apparatus provided with the frequency offset correction apparatus with the above-described configuration are next explained. First, the IF signal is outputted to multipliers 203 and 202 to be multiplied respectively by a sine wave outputted from VCXO 201 and the sine wave subjected to phase shifting in 90-degree phase-shifter 204. Thus, an I component and Q component of a baseband signal are extracted respectively from multipliers 202 and 203. In other words, the IF signal is subjected to quasi-coherent detection processing by multipliers 202 and 203.

The extracted I and Q components of the baseband signal are subjected to sampling respectively in A/D converters 205 and 206. The sampled I and Q components of the baseband signal are outputted to clock reproduction circuit 207 and guard interval remover 208.

In clock reproduction circuit 207, a sampling clock is generated using the sampled I and Q components of the baseband signal. The generated sampling clock is used as a timing for use in sampling in the above-described A/D converters 205 and 206.

In guard interval remover 208, a guard interval is removed from the sampled baseband signal, and the resultant signal is allocated to frequency rotators (A) 209 to (C) 211.

In frequency rotators (A) 209 to (C) 211, the baseband signal from which the guard interval is removed is provided with the respective frequency rotation different from each other. In other words, the center frequency of the baseband signal from which the guard interval is removed is changed by the respective frequency different from each other in frequency rotators (A) 209 to (C) 211. In addition, in each of frequency rotators (A) 209 to (C) 211, the frequency rotation to be provided to the baseband signal is determined corresponding to various conditions such as propagation path conditions and improvement degrees of a demodulated signal.

The baseband signals provided with the respective frequency rotation in frequency rotators (A) 209 to (C) 211 are outputted to FFT calculators (A) 212 to (C) 214, respectively.

In FFT calculators (A) 212 to (C) 214, the baseband signals provided with the frequency rotation are converted into a parallel signal by being subjected to serial-parallel conversion processing. Then, the signal which is converted into the parallel signal is transformed from signals on a time axis to signals on a frequency axis by being subjected to the FFT calculation. Further, the FFT calculated signals are converted into serial signals by being subjected to parallel-serial conversion processing.

The signals subjected to FFT calculation in FFT calculator (A) 212 is outputted to differentially coherent detector 215. Differentially coherent detector 215 obtains a demodulated signal by subjecting the FFT calculated signal from FFT calculator (A) 212 to differentially coherent detection processing. Further, the signals subjected to FFT calculation respectively in FFT calculators (A) 212 to (C) 214 are outputted to quality detector 216.

IF VCXO 201 generates a sine wave using an optimal local frequency in which the frequency offset is corrected (hereinafter referred to as "optimal local frequency"), the quality of a signal obtained by the FFT calculation becomes the most excellent. In other words, as an index to detect the frequency offset, the calculation result in each of FFT calculators (A) 212 to (C) 214 can be used.

Then, in this embodiment, in order to detect the frequency offset, quality detector 216 first detects a quality of the FFT calculation result outputted from each of FFT calculators (A) 212 to (C) 214 for each unit symbol (one symbol).

At this point, as factors for use in estimating the quality, estimation factors such as BER (Bit Error Rate), S/N ratio and variance can be used. In addition, the estimation criterions are not limited to the above-described estimation factors, and any one for use in estimating the quality may be used. The quality detected result by quality detector 216 is outputted to decider 217.

Further, in decider 217, the frequency offset value is extracted based on the quality detected result from quality detector 216. The frequency offset value is extracted as follows: That is, the FFT calculation result of which the quality is estimated at the most excellent one is decided from FFT calculation results in FFT calculators (A) 212 to (C) 214.

Thereafter, the FFT calculation result decided that the quality thereof is the most excellent is focused, and in the baseband signal inputted to the FFT calculator which outputs the aforementioned FFT calculation result, the frequency rotation amount provided by the frequency rotator is extracted. The extracted frequency rotation amount is set as the frequency offset value. Thus, the frequency offset value is detected without special overheads.

In addition, as a calculation method for the frequency offset value, it may be possible to use methods other than the above-described method. For example, the following method may be used: First, a calculation result with the best quality and that with the second best quality are decided from the calculation results in FFT calculators (A) 212 to (C) 214, and the provided frequency rotation amounts are extracted from the baseband signals that are inputted to the FFT calculators that output the above-mentioned decided results, respectively. Further, a value obtained by interpolating the extracted frequency rotation amounts is adopted as a frequency offset value.

At this point, in the case where a large difference is generated between qualities of two of the decided calculation results, it may be possible to execute the interpolation taking into consideration the degree of the quality of each of the FFT calculation results, without simply executing the interpolation of the frequency rotation amounts extracted from both results, i.e., without simply adopting the mean value of the above-described frequency rotation amounts.

The frequency offset value extracted as described above is outputted to D/A converter 218. In D/A converter 218, the extracted frequency offset value is converted into an analog signal (voltage). Further, the analog-signal-converted frequency offset value is outputted to VCXO 201.

The oscillation frequency of VCXO 201 is controlled by the analog signal from D/A converter 218. Hereinafter, the same operations as described above are executed.

Herein, a specific example of the reception apparatus provided with the frequency offset correction apparatus as described above is explained. For example, it is assumed that the frequency offset is 0.9X[Hz] at some point, and that in order to correct this frequency offset, 0[Hz], +X[Hz], and -X[Hz] are respectively provided to frequency rotators (A) 209, (B) 210, and (C) 211.

In this case, since the frequency of the signal outputted from each of frequency rotators (A) 209, (B) 210, and (C) 211 is changed, the frequency difference included in each signal is 0.9X[Hz], 1.9X[Hz] or - 0.1X[Hz], respectively.

Among the above-described signals, the signal outputted from frequency rotator (C) 211 has the least frequency difference contained therein. Therefore, the quality of the FFT calculation result outputted from FFT calculator (C) 214 becomes better than that of the FFT calculation result outputted from FFT calculator (A) 212 or (B) 213.

Accordingly, decider 217 extracts the frequency rotation amount -X[Hz] provided by frequency rotator (C) 211, i.e., the frequency offset value. Further, the oscillation frequency of VCXO 201 is controlled based on the extracted frequency offset value. Specifically, by subtracting X[HZ] from the aforementioned frequency offset value, the frequency offset is improved from initial 0.9[Hz] to -0.1X[Hz]. Thus, since the previously-described processing such as quasi-coherent detection and FFT calculation is executed based on the sine wave with the improved frequency offset value, the quality of the demodulated value obtained in differentially coherent detector 215 is improved. Thereafter, the same operations as described above are executed.

In the above-described case, it is possible to adjust the frequency introduction rate and the stability after the frequency introduction by varying the value of X. Further, in the above-described case, the frequency offset is held at a value equal to or less than ±X[Hz]. In addition, the above-described frequency rotation amounts provided to frequency rotators (A) 209 to (C) 211 are examples, and are properly determined based on various conditions such as propagation path conditions and qualities of an obtained demodulated signal.

As described above, according to this embodiment, it is possible to detect the optimal frequency offset by changing the baseband signal to signals each with a different frequency from each other, and detecting the quality of each signal subjected to FFT processing. Since the special overhead for detecting the frequency offset thus becomes no need, it is possible to improve transmission efficiency. Further, since the quality of the signal subjected to FFT processing is detected for each unit symbol, and based on the detected result, the frequency offset can be obtained immediately, it is possible to execute the frequency introduction with high rate. Accordingly, it is possible to improve the demodulation rate of a received signal with no effects provided to the accuracy of a demodulated signal.

In addition, although this embodiment explains the case where the number of prepared frequency rotators each of which rotates the frequency of a baseband signal is 3, the present invention is not limited to the aforementioned case, and is applicable to the case where the number of those is varied corresponding to various conditions such as propagation path conditions, demodulation rate and accuracy, and circuit scale.

Further, although this embodiment explains the case where the OFDM system is used as a transmission system, the present invention is not limited to the aforementioned case, and is applicable to the case where any transmission system, in which a frequency offset correction is executed, is used. For example, in the case where a CDMA (Code Division Multiple Access) system is used, it may be possible to use a reception apparatus provided with the arbitrary number of matched filters, replacing FFT calculators (A) 212 to (C) 214, in FIG.2.

### (Second embodiment)

The second embodiment is obtained by modifying the first embodiment in such a manner that the quality of the FFT calculation result is detected based on power. In addition, a basic configuration of a reception apparatus provided with a frequency offset correction apparatus according to this embodiment is the same as that in the first embodiment except configurations of quality detector 216 and decider 217, and the detailed explanations thereof are omitted. With respect to the reception apparatus provided with the frequency offset correction apparatus according to the second embodiment, the different points thereof from that in the first embodiment are explained below with reference to FIG.2.

Generally, with respect to the signal subjected to FFT calculation, as the quality thereof becomes higher, the power thereof becomes larger. Hence, in this embodiment, the power is used as the index for judging the quality of the signal subjected to FFT calculation processing.

In this embodiment, a power detector is used instead of quality detector 216 in the first embodiment.

In the power detector, with respect to the signals subjected to FFT calculation outputted from FFT calculators(A)212-(C)214, the power thereof is detected for each unit symbol (one symbol), and the detected result is outputted to decider 217.

In decider 217, based on the detected result from the power detector, the signal with the largest power is selected from the signals subjected to FFT calculation in FFT calculators (A) 212 to (C) 214. Further, the FFT calculation result decided that the power thereof is the largest is focused, and in the baseband signal inputted to the FFT calculator which outputs the aforementioned FFT calculation result, the frequency rotation amount provided by the frequency rotator is extracted. The extracted frequency rotation amount is set as the frequency offset value.

In addition, as a calculation method of the frequency offset value, it may be possible to use the interpolation as described in the first embodiment besides the above-described method.

Thus, according to this embodiment, after the baseband signal is changed to signals each with the different frequency from each other, and when qualities of these signals subjected to FFT processing are detected, the power of each signal subjected to FFT processing is used as the index. Since it is thus possible to assuredly detect the qualities of the signals subjected to FFT processing, the frequency offset value can be acquired more accurately.

In addition, although this embodiment explains the case where the power detector detects the power of the signal for each unit symbol using the FFT calculation results in FFT calculators (A) 212 to (C) 214, the present invention is not limited to the above case. It may be possible in the present invention that the sum of the power of the signal is calculated for each subcarrier using the aforementioned FFT calculation results, and based on the calculated result, decider 217 calculates the frequency offset value. Since it is thus possible to accurately detect the frequency offset value even in the case where a noise of a received signal is large, it is possible to improve the accuracy of the demodulated signal. Similarly, in the case where the CDMA system is used as a transmission system, it may be possible that the sum of the power of the signal is calculated for each multicode, and based on the calculated result, the frequency offset is calculated.

### (Third embodiment)

In the third embodiment, the frequency offset can be detected with higher accuracy than in the first and second embodiments. In addition, a basic configuration of a reception apparatus provided with a frequency offset correction apparatus according to this embodiment is the same as that in the first embodiment except configurations of quality detector 216 and decider 217, and the detailed explanations thereof are omitted. With respect to the reception apparatus provided with the frequency offset correction apparatus according to the third embodiment, the different points thereof from the first embodiment are explained below with reference to FIG.2.

In addition, although this embodiment explains the case where the OFDM system and CDMA system are used as a transmission system, the present invention is not limited to above case, and is applicable to the case where a system, in which a plurality of signals are concurrently transmitted, is used. Further, it is assumed that in either case of the OFDM system or CDMA system, a transmission side apparatus transmits a signal in such a manner that the power of the signal to be transmitted with each subcarrier or the signal to be transmitted to be despread with each code.

In this embodiment, a power fluctuation detector is used instead of quality detector 216 in the first embodiment. In the power fluctuation detector, with respect to signals subjected to FFT calculation outputted from FFT calculators (A) 212 to (C) 214, the power of the signal to be transmitted with each subcarrier or the signal to be despread with each code is detected, and the detected result is outputted to decider 217.

In decider 217, based on the detected result from the power detector, the signal, of which the fluctuation on the power of the signal to be transmitted with each subcarrier or the signal to be despread with each code is the smallest, is selected from the signals subjected to FFT calculation in FFT calculators (A) 212 to (C) 214.

Specifically, in the OFDM system, when the carrier interval is narrow, powers of signals to be transmitted with neighboring subcarriers would be almost the same if the frequency selective fading occurred. Accordingly, the absolute value of a difference between powers of signals to be transmitted with neighboring subcarriers or the sum of the square of powers of signals to be transmitted with neighboring subcarriers is calculated. Further, among the signals subjected to FFT calculation in FFT calculators (A) 212 to (C) 214, the signal with the smaller calculation result is decided that the quality of the signal is more excellent.

In addition, in the CDMA system, since the frequency band is the same for each code, the variance of the power is calculated for each of a plurality of codes. Further, among the signals subjected to FFT calculation in FFT calculators (A) 212 to (C) 214, the signal with the smaller calculation result is decided that the quality of the signal is more excellent.

Thereafter, the same processing as in the first embodiment is executed, and the frequency offset value is detected.

Thus, according to this embodiment, the power of the signal is detected for each subcarrier or code, and according to the fluctuation calculated based on the detected result, the quality of the FFT calculated signal is decided. Accordingly, it is possible to detect the frequency offset assuredly, and consequently to correct the frequency offset.

### (Fourth embodiment)

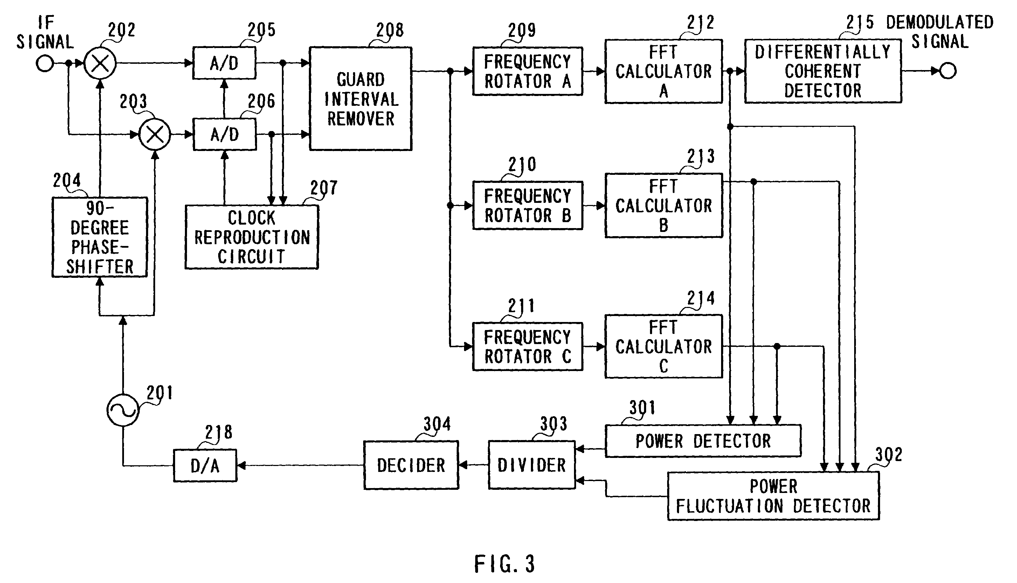

In the fourth embodiment, the frequency offset can be detected with further higher accuracy than in the first to third embodiments. FIG.3 is a block diagram illustrating a configuration of a reception apparatus provided with a frequency offset correction apparatus according to the fourth embodiment of the present invention. In addition, in FIG.3, the same configuration as in the first embodiment is given the same symbol, and the detailed explanations thereof are omitted.

In FIG.3, power detector 310 is the same as explained in the second embodiment, and power fluctuation detector 302 is the same as explained in the third embodiment.

With respect to each of the signals subjected to FFT calculation in FFT calculators (A) 212 to (C) 214, the sum of the power over unit interval calculated for each unit symbol is inputted to divider 303 from power detector 301. Further, with respect to each of the signals subjected to FFT calculation in FFT calculator (A) 212 to (C) 214, the fluctuation result of the power over the unit interval calculated for each unit symbol or code is inputted to divider 303 from power fluctuation detector 302.

In divider 303, the fluctuation result from power fluctuation detector 302 is divided by the aforementioned sum from power detector 301 for each of the signals subjected to FFT calculation in FFT calculators (A) 212 to (C) 214. For example, the fluctuation result in the signals subjected to FFT calculation in FFT calculator (B) 213 is divided by the sum of the power of the signals subjected to FFT calculation in FFT calculator (B) 213. The division processing result is outputted to decider 304.

In decider 304, among the signals subjected to calculation in FFT calculators (A) 212 to (C) 214, the signal of which the aforementioned division result is the smallest is focused, and the frequency rotation amount provided to the baseband signal inputted to the FFT calculator which outputs the aforementioned signal subjected to FFT calculation is extracted.

Thereafter, as described in the first embodiment, the frequency offset value is detected.

Thus, according to this embodiment, since the quality of the signal subjected to FFT calculation is decided over some interval based on the fluctuation of the power to the sum of the power of the signals with all the unit symbols, it is possible to detect the frequency offset value with further high accuracy as compared to the case where the quality is decided based on the power level or the fluctuation of the power.

### (Fifth embodiment)

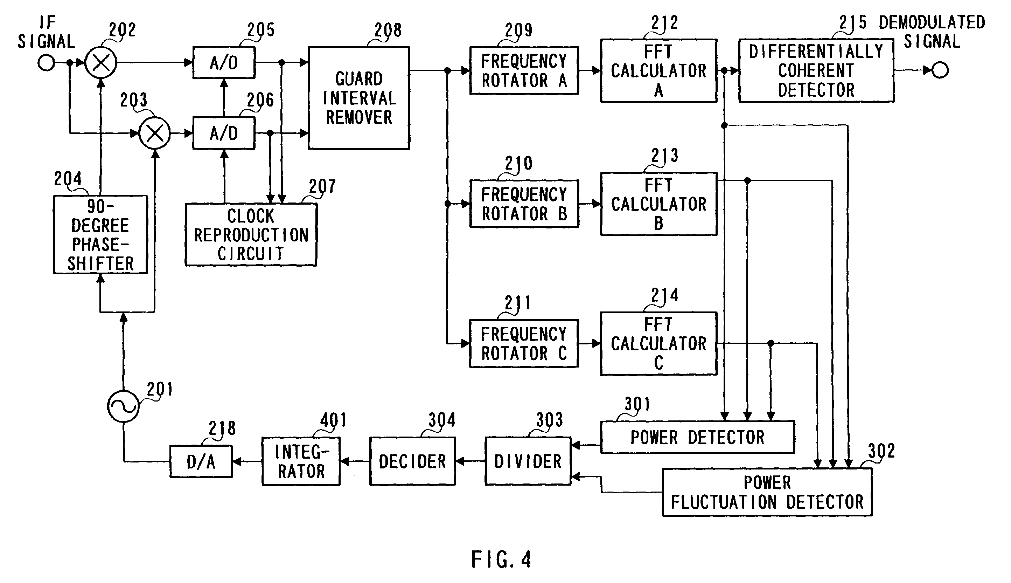

In the fifth embodiment, the frequency offset can be detected accurately even in the case where the S/N ratio of a received signal is lower, as compared to the first to fourth embodiments. FIG.4 is a block diagram illustrating a configuration of a reception apparatus provided with a frequency offset correction apparatus according to the fifth embodiment of the present invention. In addition, in FIG.4, the same configuration as in the fourth embodiment is given the same symbol, and the detailed explanations thereof are omitted.

In FIG.4, integrator 401 averages the frequency offset value outputted from decider 304 over a constant interval. In addition, as the constant interval, for example, a unit slot, unit frame, and the number of introduction times can be used. According to the aforementioned processing, even in the case where the S/N ratio of the received signal is low, by the use of the average value of frequency offset values detected alone by one frequency introduction, it is possible to detect an optimal frequency offset value.

Thus, according to this embodiment, since the optimal frequency offset value can be detected based on the average value of frequency offset values detected alone by one frequency introduction, it is possible to correct the frequency offset more accurately and stably as compared to the first to fourth embodiments.

In addition, in this embodiment, although the explanations are performed using the fourth embodiment as an example, the present invention is applicable to either of the first to third embodiments.

### (Sixth embodiment)

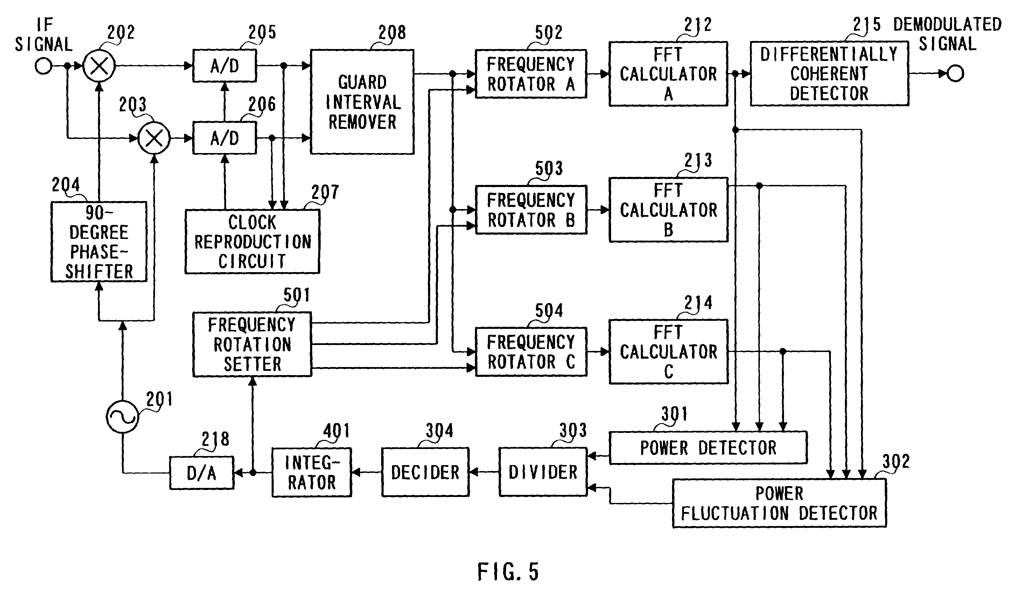

The sixth embodiment is obtained to modify the first to fifth embodiments in such a manner that the frequency rotation amount can be varied as appropriate. FIG.5 is a block diagram illustrating a configuration of a reception apparatus provided with a frequency offset correction apparatus according to the sixth embodiment of the present invention. In addition, in FIG.5, the same configuration as in the fifth embodiment is given the same symbol, and the detailed explanations thereof are omitted.

In FIG.5, frequency rotators (A) 502 to (C) 504 vary the frequency of a baseband signal according to the rotation amount provided from frequency rotation setter 501.

Based on the averaged frequency offset value obtained in integrator 401, frequency rotation setter 501 determines the frequency rotation amount to be provided to each of frequency rotators (A) 502 to (C) 504.

Specifically, frequency rotation setter 501 sets, for example, the rotation amount to be provided to each frequency rotator at a large value at an initial time, and sets the aforementioned rotation value at a smaller value as the absolute value of the frequency offset value from integrator 401 becomes smaller, in other words, as the frequency offset is further improved.

It is thus possible to execute the first frequency introduction (initial introduction) quickly, and to improve the stability after the introduction. In other words, it is possible to obtain the demodulated signal quickly, and at the same time to keep the frequency offset in a constant range. Accordingly, since not only it is possible to reduce the power consumption of the whole apparatus, but also it is not necessary to provide an apparatus for improving the introduction rate separately, the circuit scale of the whole apparatus can be reduced also.

In addition, although this embodiment explains the case where the frequency rotation amount is varied based on the frequency offset value from integrator 401, the present invention is not limited to the above case, and applicable to the case where the frequency rotation amount is set based on various indexes such processing time and the number of frames.

Thus, according to this embodiment, since the frequency rotation amount is varied corresponding to various conditions, it is possible to execute efficient frequency offset correction.

### (Seventh embodiment)

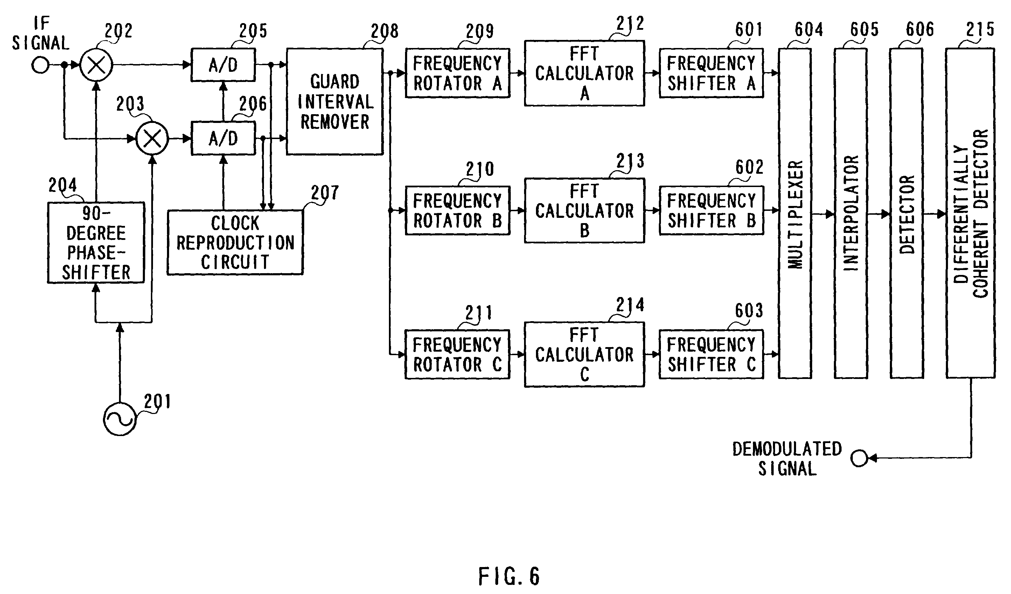

In the seventh embodiment, as compared to the first to sixth embodiments, a demodulated signal is obtained by correcting the frequency offset without controlling the frequency of a VCXO. FIG.6 is a block diagram illustrating a configuration of a reception apparatus provided with a frequency offset correction apparatus according to the seventh embodiment of the present invention. In addition, in FIG.6, the same configuration as in the first embodiment is given the same symbol, and the detailed explanations thereof are omitted. The points different from the first embodiment are explained below.

Frequency shifters (A) 601 to (C) 603 execute the frequency shift on FFT calculated signals outputted from FFT calculators (A) 212 to (C) 214 using the frequency change amount provided in frequency rotators (A) 209 to (C) 211, respectively. Multiplexer 604 multiplexes the signals with the frequency sifted in frequency shifters (A) 601 to (C) 603. Interpolator 605 interpolates the signal multiplexed in multiplexer 604, outputs the interpolated signal to detector 606. Detector 606 detects the frequency offset using the interpolated signal. Further, detector 606 outputs the signal, which is corrected using the aforementioned frequency offset detected from the interpolated signal, to differentially coherent detector 215. Differentially coherent detector 215 executes the differentially coherent detection processing on the frequency offset corrected signal outputted from detector 606

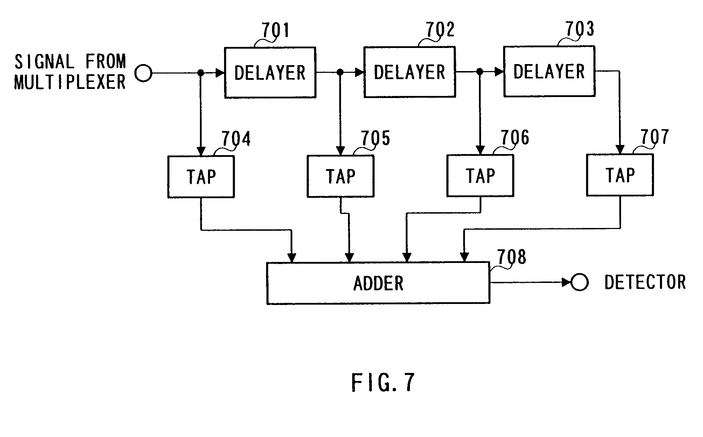

Herein, the details of interpolator 605 are further explained with reference to FIG.7. FIG.7 is a block diagram illustrating an example of a configuration of an interpolator used in the frequency offset correction apparatus according to the seventh embodiment of the present invention. The interpolator illustrated in FIG.7 is comprised of a FIR (Finite Impulse Response) filter comprised of mainly delayers, taps and adder.

In FIG.7, delayer 701 delays the signal outputted from multiplexer 604 illustrated in FIG.6 by a predetermined time, and outputs the delayed signal to delayer 702 and tap 705. Delayer 702 delays the signal outputted from delayer 701 by a predetermined time, and outputs the delayed signal to delayer 703 and tap 706. Delayer 703 delays the signal outputted from delayer 702 by the predetermined time, and outputs the delayed signal to tap 707.

Tap 704 executes the weighting on the signal outputted from multiplexer 604 illustrated in FIG.6, and outputs the resultant signal to adder 708. Similarly, taps 705 to 707 execute the weighting on the signals delayed in delayers 701 to 703, and output the resultant signal to adder 708, respectively. Adder 708 adds the signals outputted from taps 704 to 707, and outputs the added signal to detector 606.

Operations of the reception apparatus provided with the frequency offset correction apparatus with the above-described configuration is next explained with reference to FIG.6 and FIG.7. Herein, in order to simplify the explanation, it is assumed that a baseband signal, with a subcarrier interval of Y[Hz], having power of a, b, c or d respectively on the frequency axis of Y[Hz], 2Y[Hz], 3Y[Hz] or 4Y[Hz] is inputted to frequency rotators (A) 209 to (C) 211. It is further assumed that this baseband signal has power of e, f, g or h respectively on the frequency axis of Y-X[Hz], 2Y-X[Hz], 3Y-X[Hz] or 4Y-X[Hz], and has power of i, j, k or l respectively on the frequency axis of Y+X[Hz], 2Y+X[HZ], 3Y+X[Hz] or 4Y+X[Hz].

Frequency rotators (A) 209 to (C) 211 each changes the frequency of the inputted baseband signal by 0[Hz], +X[Hz] or -X[Hz], and outputs the resultant signal to FFT calculator (A) 212, (B) 213 or (C) 214, which subjects the inputted signal to FFT calculation, respectively.

At this point, with respect to the signal subjected to FFT calculation in FFT calculator (A) 212, since the change amount in frequency rotator (A) 209 is 0[Hz], the signal has power of a, b, c or d respectively on the frequency axis of Y[Hz], 2Y[Hz], 3Y[Hz] or 4Y[Hz].

With respect to the signal subjected to FFT calculation in FFT calculator (B) 213, since the change amount in frequency rotator (B) 210 is +X[Hz], the signal has power of e, f, g or h respectively on the frequency axis of Y[Hz], 2Y[Hz], 3Y[Hz] or 4Y[Hz].

With respect to the signal subjected to FFT calculation in FFT calculator (C) 214, since the change amount in frequency rotator (C) 211 is -X[Hz], the signal has power of h, i, j or k respectively on the frequency axis of Y[Hz], 2Y[Hz], 3Y[Hz] or 4Y[Hz].

Thereafter, with respect to the signals subjected to FFT calculation in FFT calculators (A) 212 to (C) 214, frequency shifter (A) 601, (B) 602 or (C) 603 shifts the frequency of the respective signal by an inverse value of the frequency change amount provided by frequency rotator (A) 209, (B) 210 or (C) 211, i.e., 0[Hz], -X[Hz] and +[Hz], respectively.

As a result, the signals shifted by the frequency shifters (A) 601 to (C) 603 become the following signals. Namely, the signal shifted by the frequency shifter (A) 601 becomes a signal having power of a, b, c or d respectively on the frequency axis of Y[Hz], 2Y[Hz], 3Y[Hz] or 4Y[Hz].

Further, the signal shifted by the frequency shifter (B) 602 becomes a signal having power of e, f, g or h respectively on the frequency axis of Y-X[Hz], 2Y-X[Hz], 3Y-X[Hz] or 4Y-X[Hz].

Furthermore, the signal shifted by the frequency shifter (C) 603 becomes a signal having power of i, j, k or l respectively on the frequency axis of Y+X[Hz], 2Y+X[Hz], 3Y+X[Hz] or 4Y+X[Hz].

Thereafter, each signal subjected to the frequency shift as described above is outputted to multiplexer 604 to be multiplexed on the same frequency axis. According to this processing, the multiplexed signal becomes a signal having power of e, a, j, f, b, j, g, c, k, h, d, or l respectively on the frequency axis of Y-X, Y, Y+X, 2Y-X, 2Y, 2Y+X, 3Y-X, 3Y, 3Y+X, 4Y-X, 4Y or 4Y+X [Hz].

The signal multiplexed as described above is outputted to interpolator 605. In interpolator 605, as can be seen from FIG.7, the signal outputted from multiplexer 604 is outputted to delayer 701 and tap 704. In tap 704, the signal from multiplexer 604 is weighted, and then outputted to adder 708.

Further, in delayer 701, the signal from multiplexer 604 is delayed by a predetermined time T, and then outputted to delayer 702 and tap 705. In tap 705, the signal delayed by the time T by delayer 701 is weighted, and then outputted to adder 708.

Thereafter, the same processing as descried above is executed in delayers 702 and 703, and taps 706 and 707. As a result, the signal from multiplexer 604 becomes signals respectively delayed by 0, T, 2T, and 3T being weighted. The resultant signals are inputted to adder 708 and multiplexed therein.

According to the above processing, the signal multiplexed as described above in multiplexer 604 becomes the signals with almost continuous values by being subjected to the interpolation processing. In other words, in interpolator 605, the interpolation curve is obtained based on the signal multiplexed in multiplexer 604. At this point, the signals subjected to FFT calculation become the signals with almost continuous values in this embodiment. On the contrary, such signals become the signals with discrete values in the first to sixth embodiments. The signals subjected to the interpolation processing in interpolator 605 are outputted to detector 606.

In addition, in interpolator 605, the time T for use in delaying in delayers 701 to 703 is varied as appropriate corresponding to various conditions, and the weighting factors for use in taps 704 to 707 is optimized as appropriate by, for example, channel estimation with a training and matrix.

Detector 606 detects the frequency offset based on the signals subjected to the interpolation processing in interpolator 605. Namely, since the signals from interpolator 605 have almost continuous values, the optimal point of each subcarrier on the frequency axis can be detected easily. Specifically, since the transmission side apparatus transmits the signal with each subcarrier by almost the same power, the signal with each subcarrier is expected to have almost the same power at the reception side. Accordingly, by referring to the power of the signals subjected to interpolating processing in interpolator 605, it is possible to detect the optimal position of each subcarrier.

Thus, the frequency offset value is detected. In the above-described example, the amount, by which the optimal position of the signal with each subcarrier shifts from Y, 2Y, 3Y or 4Y [Hz], is detected.

The detected result in detector 606 is outputted to differentially coherent detector 215. Based on the detected result from detector 606, differentially coherent detector 215 obtains the demodulated signal of which the frequency offset is corrected.

In addition, it is possible to execute the correction of frequency offset more accurately by returning the frequency offset obtained in detector 606 to VCXO 201. In this case, it is possible to correct the frequency offset accurately by averaging the frequency offset values over a constant period, and controlling VCXO 201 as appropriate only using the averaged value, without controlling VCXO 201 frequently using the frequency offset obtained in detector 606.

As described above, according to this embodiment, it is possible to obtain the signals with almost continuous values faithful to the baseband signal by changing the frequency of the baseband signal with each of change amounts different from each other prior to FFT calculation, subjecting each of the FFT calculated signals to the frequency shift with the aforementioned change amount, and further multiplexing the resultant signals on the same frequency axis to execute the interpolation processing.

Thus, since it is possible to obtain precise signals on the frequency axis without increasing the amount of FFT calculation, the frequency offset can be detected easily. Accordingly, the frequency offset can be detected accurately without using special overheads, thereby making it possible to improve transmission efficiency and demodulation rate.

Further, since the control of VCXO 201 is not necessary or executed as appropriate at the time frequency offset is corrected, it is possible to improve the stability of the whole apparatus, and further to prevent the occurrence of the excessive control and oscillation caused by the control delay due to the loop (the frequency offset is returned to the VCXO), accordingly providing advantages to reception of burst signals, for example, in packet transmission.

In addition, although this embodiment explains the case where the number of frequency rotators and that of frequency shifters are both 3, the present invention is not limited to the above case, and is applicable to the case where each number is varied as appropriate corresponding to various conditions. Further, the frequency change amount provided to the baseband signal by the frequency rotator is not limited to the examples as previously described, and is changed as appropriate in order to improve, for example, the accuracy of the demodulated signal and processing rate.

### (Eighth embodiment)

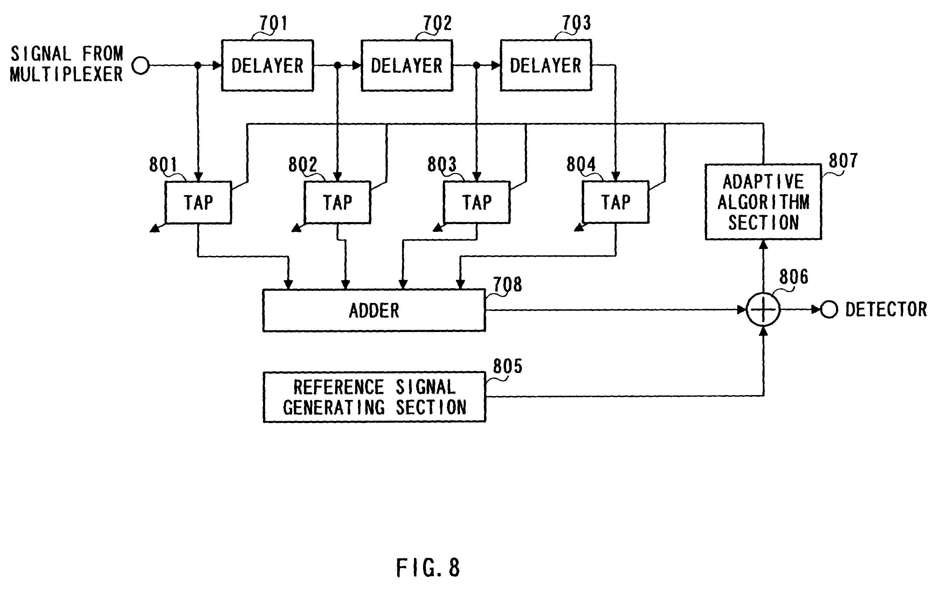

The eighth embodiment is obtained by modifying the seventh embodiment in such a manner that training is executed in the tap in the interpolator using a reference signal inserted in a transmission apparatus. The reception apparatus provided with a frequency offset correction apparatus according to this embodiment is explained below with reference to FIG.8.

FIG.8 is a block diagram illustrating an interpolator used in the frequency offset correction apparatus according to the eighth embodiment of the present invention. In addition, in FIG.8, the same configuration as in interpolator 605 in the seventh embodiment is given the same symbol, and the detailed explanations thereof are omitted. Further, the configuration of the reception apparatus of this embodiment is the same as that in the seventh embodiment except the interpolator, and the detailed explanations thereof are omitted.

In FIG.8, the weighting factors for use in taps 801 to 804 are determined as follows: First, the signals weighted in taps 801 to 804 are added in adder 708. The added result in adder 708 and the reference signal from reference signal generating section 805 are outputted to subtracter 806 to be subjected to subtracting processing. In addition, the aforementioned reference signal is a signal transmitted from a transmission side apparatus being multiplexed with transmission data.

Further, the subtraction result in subtracter 806 is outputted to adaptive algorithm section 807. In adaptive algorithm section 807, an optimal weighting factor is updated using an adaptive algorithm so that the aforementioned subtraction result, i.e., error is minimized. In addition, as the adaptive algorithm, for example, LMS (Least Mean Square) and RLS (Recursive Least Square) are used. The weighting factor updated by adaptive algorithm section 807 is outputted to taps 801 to 804.

Thus, according to this embodiment, since the weighting factor for use in the interpolator is determined based on the reference signal transmitted from the transmission apparatus, it is possible to accurately correct the frequency offset.

### (Ninth embodiment)

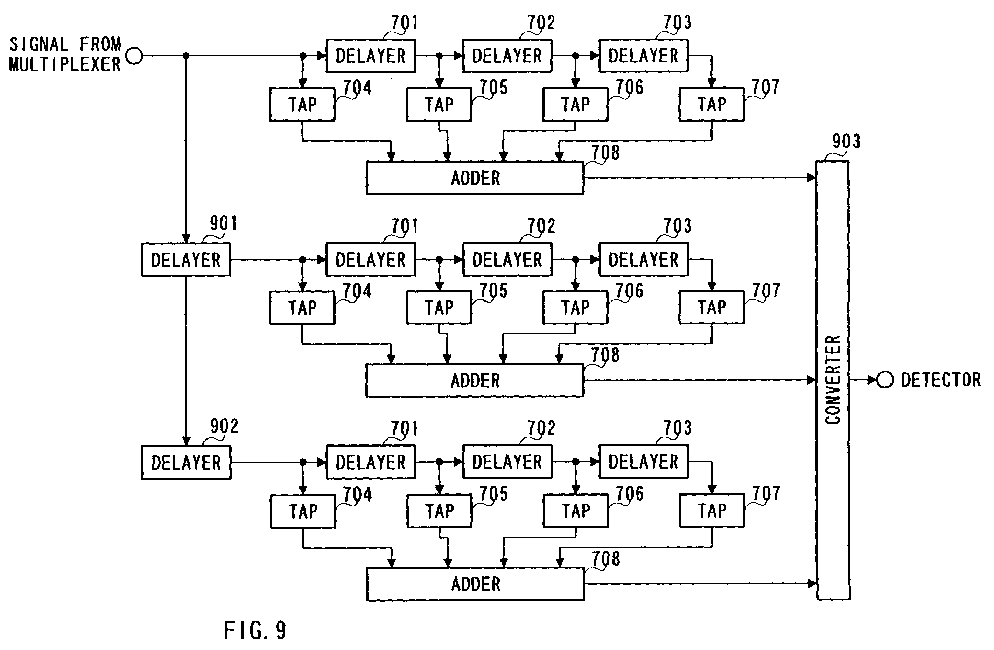

The ninth embodiment is obtained by modifying the seventh embodiment in such a manner that a different interpolation is executed for each subcarrier by preparing a plurality of FIR filters. FIG.9 is a block diagram illustrating an interpolator for use in a frequency offset correction apparatus according to the ninth embodiment of the present invention. In addition, in FIG.9. the same configuration as in interpolator 605 in the seventh embodiment is given the same symbol, and the detailed explanations thereof are omitted. Further, the configuration of the reception apparatus of this embodiment is the same as that in the seventh embodiment except the interpolator, and the detailed explanations thereof are omitted. In addition, FIG.9 illustrates a configuration of the case where the number of subcarriers is 3, and the number of frequency kinds to be changed is 3, in order to simplify the explanation.

As illustrated in FIG.9, the interpolator for use in the frequency offset correction apparatus according to this embodiment has three FIR filters each with the same configuration as interpolator 605 in the seventh embodiment, delayers 901 and 902, and converter 903. In addition, the aforementioned FIR filters are prepared in such a manner that the number thereof becomes equal to that of subcarriers.

Delayer 901 delays the signal from multiplexer 604 by a delay time corresponding to an interval between subcarriers, and outputs the delayed signal to delayer 701 and tap 704. Delayer 902 delays the signal delayed in delayer 901 by the delay time corresponding to the interval between subcarriers, and outputs the delayed signal to delayer 701 and tap 704.

In addition, the delay time in delayers 701 to 703 in three FIR filters are determined corresponding to the frequency kinds to be changed. In this case, since the number of frequency kinds to be changed is 3, the aforementioned delay time is set at a delay amount that is one-third the subcarrier interval.

Converter 903 converts, with respect to the interpolation results outputted from three adders 708, parallel signals into serial signals, and outputs the resultant signals to detector 606.

Thus, according to this embodiment, since it is possible to execute the different interpolation for each subcarrier, the frequency offset can be corrected accurately even in the case where the different frequency difference is generated between subcarriers due to, for example, frequency selective fading.

In addition, it is possible to provide the reception apparatus provided with the frequency offset correction apparatus according to either of the embodiments as described above in, for example, base station apparatuses and radio communication apparatuses.
The frequency offset correction apparatus of the present invention has a change frequency setting section for changing a frequency of a baseband signal obtained from a received signal with change amounts which are different from each other to set a plurality of change frequencies, a quality measuring section for measuring a quality of a demodulated signal obtained from the baseband signal of which the frequency is changed for each of the change frequencies, a selecting section for selecting a change frequency for use in a calculation of a frequency offset based on a measurement result of the quality, and a calculating section for calculating the frequency offset using a selected change frequency.

According to this composition, since the apparatus changes the frequency of the baseband signal with the change amounts which are different from each other to set the plurality of change frequencies, measures the quality of the demodulated signal obtained from the baseband signal of which the frequency is changed to each of the change frequencies, and further selects the optimal change frequency for use in a calculation of a frequency offset based on the measured quality, the apparatus can detect the optimal frequency offset by using the frequency change amount corresponding to the selected change frequency. Since the special overhead for detecting the frequency offset thus becomes no need, it is possible to improve transmission efficiency. Further, by setting the frequency rotation amount to be provided to the baseband signal as appropriate, the frequency offset can be detected efficiently, thereby making it possible to improve the demodulation rate.

The frequency offset correction apparatus of the present invention adopts a constitution where the change frequency setting section determines the change amounts corresponding to accuracy of a calculated frequency offset in the above constitution.

According to this composition, since it is possible to set the change amounts to be provided to the frequency of the baseband signal corresponding to the accuracy of the frequency offset, in other words, corresponding to various conditions such as the degree of the frequency offset at the initial time, improved degree of the frequency offset, the number of frequency introduction times, and qualities of a received signal, it is possible to improve the improved rate of the frequency offset, and at the same time to stabilize the frequency offset in a constant range.

The frequency offset correction apparatus of the present invention adopts a constitution where the selecting section selects the change frequency corresponding to the demodulated signal of which the quality is excellent in the above constitution.

According to this composition, with respect to the signal of which the frequency is changed, since the frequency offset of the signal becomes smaller as the quality of the demodulated signal becomes excellent, it is possible to detect an accurate frequency offset by selecting the change frequency corresponding to the signal with the excellent quality from demodulated signals.

The frequency offset correction apparatus of the present invention adopts a constitution where the calculating section executes interpolation processing on the change amount corresponding to the selected change frequency at the time the calculation is executed in the above constitution.

According to this composition, since the frequency offset is detected by calculating the frequency offset using the change frequency corresponding to each signal of which the demodulated quality is excellent, and then executing the interpolation processing on each of calculated frequency offsets, it is possible to detect the frequency offset more accurately and quickly.

The frequency offset correction apparatus of the present invention adopts a constitution having a frequency changing section for changing a frequency of a baseband signal obtained from a received signal with change amounts which are different from each other, a frequency shift section for executing frequency shift on a demodulated signal obtained from the baseband signal of which the frequency is changed for each of the change amounts based on the change amounts, an interpolating section for obtaining an interpolation curve by multiplexing demodulated signals subjected to the frequency shift, and executing interpolating processing on a multiplexed signal, and a calculating section for calculating a frequency offset using the interpolation curve.

According to this composition, since it is possible to change the frequency of the baseband signal with the frequency amounts different from each other to set a plurality of change frequencies, execute the frequency shift on the demodulated signal of the baseband signal of which the frequency is changed to each of the change frequencies based on the aforementioned change amounts, and fetch the interpolation curve with almost continuous values from the demodulated signals subjected to the frequency shift, the frequency offset can be calculated easily and with high speed. Since the special overhead for detecting the frequency offset thus becomes no need, it is possible to improve transmission efficiency. The frequency offset correction apparatus of the present invention adopts a constitution where the calculating section calculates the frequency offset using power of a signal to be transmitted with each subcarrier and power of the baseband signal.

According to this composition, since it is possible to easily calculate the frequency offset from the fetched interpolation curve using the power of the signal to be transmitted with each subcarrier and the power of the baseband signal, it is possible to assuredly execute the correction of the frequency offset.

The frequency offset correction apparatus of the present invention adopts a constitution where the frequency changing section determines the change amounts corresponding to accuracy of a detected frequency offset in the above constitution.

According to this composition, since it is possible to set the change amount to be provided to the frequency of the baseband signal corresponding to the accuracy of the frequency, in other words, corresponding to various conditions such as the degree of the frequency offset at the initial time, improved degree of the frequency offset, the number of frequency introduction times, and qualities of a received signal, it is possible to improve the improved rate of the frequency offset, and at the same time to stabilize the frequency offset in a constant range.

The communication terminal apparatus of the present invention adopts a constitution provided with a frequency offset correction apparatus, and the frequency offset correction apparatus has a change frequency setting section for changing a frequency of a baseband signal obtained from a received signal with change amounts which are different from each other to set a plurality of change frequencies, a quality measuring section for measuring a quality of a demodulated signal obtained from the baseband signal of which the frequency is changed for each of the change frequencies, a selecting section for selecting a change frequency for use in a calculation of a frequency offset based on a measurement result of the quality, and a calculating section for calculating the frequency offset using a selected change frequency.

The communication terminal apparatus of the present invention adopts a constitution provided with a frequency offset correction apparatus, the frequency offset correction apparatus has a frequency changing section for changing a frequency of a baseband signal obtained from a received signal with change amounts which are different from each other, a frequency shift section for executing frequency shift on a demodulated signal obtained from the baseband signal of which the frequency is changed for each of the change amounts based on the change amounts, an interpolating section for obtaining an interpolation curve by multiplexing demodulated signals subjected to the frequency shift, and executing interpolating processing on a multiplexed signal, and a calculating section for calculating a frequency offset using the interpolation curve.

According to this composition, since the frequency offset correction apparatus which improves transmission efficiency and demodulation rate is provided, it is possible to provide a radio communication terminal apparatus which performs excellent and effective communications.

The base station apparatus of the present invention adopts a constitution where the base station apparatus performs communications with a communication terminal apparatus provided with a frequency offset correction apparatus, and the frequency offset correction apparatus has a change frequency setting section for changing a frequency of a baseband signal obtained from a received signal with change amounts which are different from each other to set a plurality of change frequencies, a quality measuring section for measuring a quality of a demodulated signal obtained from the baseband signal of which the frequency is changed for each of the change frequencies, a selecting section for selecting a change frequency for use in a calculation of a frequency offset based on a measurement result of the quality, and a calculating section for calculating the frequency offset using a selected change frequency.

The base station apparatus of the present invention adopts a constitution where the base station apparatus performs communications with a communication terminal apparatus provided with a frequency offset correction apparatus, the frequency offset correction apparatus has a frequency changing section for changing a frequency of a baseband signal obtained from a received signal with change amounts which are different from each other, a frequency shift section for executing frequency shift on a demodulated signal obtained from the baseband signal of which the frequency is changed for each of the change amounts based on the change amounts, an interpolating section for obtaining an interpolation curve by multiplexing demodulated signals subjected to the frequency shift, and executing interpolating processing on a multiplexed signal, and a calculating section for calculating a frequency offset using the interpolation curve.

According to this composition, it is possible to provide the base station apparatus performs excellent and effective communications by performing radio communications with the communication terminal apparatus provided with the frequency offset correction apparatus which improves transmission efficiency and demodulation rate.

A frequency offset correction method of the present invention has the steps of changing a frequency of a baseband signal obtained from a received signal with change amounts which are different from each other to set a plurality of change frequencies, measuring a quality of a demodulated signal obtained from the baseband signal of which the frequency is changed for each of the change frequencies, selecting a change frequency for use in an calculation of a frequency offset based on a measurement result of the quality, and calculating the frequency offset using a selected change frequency.

According to this method, since it is possible to change the frequency of the baseband signal with the change amounts which are different from each other to set the plurality of change frequencies, measure the quality of the demodulated signal obtained from the baseband signal of which the frequency is changed to each of the change frequencies, and further select the optimal change frequency for use in the calculation of the frequency offset based on the measured quality, the optimal frequency offset can be detected by using the frequency change amount corresponding to the selected change frequency offset. Since the special overhead for detecting the frequency offset thus becomes no need, it is possible to improve transmission efficiency. Further, by setting the frequency rotation amount to be provided to the baseband signal as appropriate, the frequency offset can be detected efficiently, thereby making it possible to improve the demodulation rate.

The frequency offset correction method of the present invention has the steps of changing a frequency of a baseband signal obtained from a received signal with change amounts which are different from each other, executing frequency shift on a demodulated signal obtained from the baseband signal of which the frequency is changed for each of the change amounts based on the change amounts, obtaining an interpolation curve by multiplexing demodulated signals subjected to the frequency shift, and executing interpolating processing on a multiplexed signal, and calculating a frequency offset using the interpolation curve.

According to this method, since it is possible to change the frequency of the baseband signal with the frequency amounts different from each other to set a plurality of change frequencies, execute the frequency shift on the demodulated signal of the baseband signal of which the frequency is changed to each of change frequencies based on the aforementioned change amounts, and fetch the interpolation curve with almost continuous values from the demodulated signals subjected to the frequency shift, the frequency offset can be calculated easily and with high speed. Since the special overhead for detecting the frequency offset thus becomes no need, it is possible to improve transmission efficiency.

As described above, according to the present invention, it is possible to provide the frequency offset correction apparatus which improves transmission efficiency and demodulation rate.

The present invention is not limited to the above described embodiments, and various variations and modifications may be possible without departing from the scope of the present invention.

This application is based on the Japanese Patent Application No.HEI11-046772 filed on February 24, 1999, entire content of which is expressly incorporated by reference herein.

## Claims

1. A frequency offset correction apparatus comprising:
change frequency setting means(209-211, 501-504) for changing a frequency of a baseband signal obtained from a received signal with change amounts which are different from each other to set a plurality of change frequencies;
quality measuring means(216) for measuring a quality of a demodulated signal obtained from the baseband signal of which the frequency is changed for each of the change frequencies;
selecting means(217) for selecting one of the change frequencies for use in a calculation of a frequency offset, based on a measurement result of said quality; and
calculating(217,218) means for calculating the frequency offset using a selected change frequency.

2. The frequency offset correction apparatus according to claim 1, wherein said change frequency setting means(209-211,501-504) determines said change amounts corresponding to accuracy of a calculated frequency offset.

3. The frequency offset correction apparatus according to claim 1, wherein said selecting means(217) selects one of the change frequencies corresponding to the demodulated signal of which the quality is excellent.

4. The frequency offset correction apparatus according to claim 1, wherein said calculating means(217,218) executes interpolation processing on one of the change amounts corresponding to the selected change frequency at the time the calculation is executed.

5. A frequency offset correction apparatus comprising:
frequency changing means(209-211) for changing a frequency of a baseband signal obtained from a received signal with change amounts which are different from each other;
frequency shift means(601-603) for executing frequency shift on a demodulated signal obtained from the baseband signal of which the frequency is changed for each of said change amounts, based on said change amounts;
interpolating means(604,605) for obtaining an interpolation curve by multiplexing the demodulated signal subjected to the frequency shift, and executing interpolating processing on a multiplexed signal; and
calculating means(606) for calculating a frequency offset using said interpolation curve.

6. The frequency offset correction apparatus according to claim 5, wherein said calculating means(606) calculates the frequency offset using power of a signal to be transmitted with each subcarrier and power of the baseband signal.

7. The frequency offset correction apparatus according to claim 5, wherein said frequency changing means(209-211) determines said change amounts corresponding to accuracy of a detected frequency offset.

8. A communication terminal apparatus provided with a frequency offset correction apparatus, said frequency offset correction apparatus comprising:
change frequency setting means for changing a frequency of a baseband signal obtained from a received signal with change amounts which are different from each other to set a plurality of change frequencies;
quality measuring means for measuring a quality of a demodulated signal obtained from the baseband signal of which the frequency is changed for each of the change frequencies;
selecting means for selecting one of the change frequencies for use in a calculation of a frequency offset, based on a measurement result of said quality; and
calculating means for calculating the frequency offset using a selected change frequency.

9. A communication terminal apparatus provided with a frequency offset correction apparatus, said frequency offset correction apparatus comprising:
frequency changing means for changing a frequency of a baseband signal obtained from a received signal with change amounts which are different from each other;
frequency shift means for executing frequency shift on a demodulated signal obtained from the baseband signal of which the frequency is changed for each of said change amounts, based on said change amounts;
interpolating means for obtaining an interpolation curve by multiplexing the demodulated signal subjected to the frequency shift, and executing interpolating processing on a multiplexed signal; and
calculating means for calculating a frequency offset using said interpolation curve.

10. A base station apparatus performing radio communications with a communication terminal apparatus provided with a frequency offset correction apparatus, said frequency offset correction apparatus comprising:
change frequency setting means for changing a frequency of a baseband signal obtained from a received signal with change amounts which are different from each other to set a plurality of change frequencies;
quality measuring means for measuring a quality of a demodulated signal obtained from the baseband signal of which the frequency is changed for each of the change frequencies;
selecting means for selecting one of the change frequencies for use in a calculation a frequency offset, based on a measurement result of said quality; and
calculating means for calculating the frequency offset using a selected change frequency.

11. A base station apparatus performing radio communications with a communication terminal apparatus provided with a frequency offset correction apparatus, said frequency offset correction apparatus comprising:
frequency changing means for changing a frequency of a baseband signal obtained from a received signal with change amounts which are different from each other;
frequency shift means for executing frequency shift on a demodulated signal obtained from the baseband signal of which the frequency is changed for each of said change amounts, based on said change amounts;
interpolating means for obtaining an interpolation curve by multiplexing the demodulated signal subjected to the frequency shift, and executing interpolating processing on a multiplexed signal;
calculating means for calculating a frequency offset using said interpolation curve.

12. A frequency offset correction method comprising the steps of:
changing a frequency of a baseband signal obtained from a received signal with change amounts which are different from each other to set a plurality of change frequencies;
measuring a quality of a demodulated signal obtained from the baseband signal of which the frequency is changed for each of the change frequencies;
selecting one of the change frequencies for use in a calculation of a frequency offset, based on a measurement result of said quality; and
calculating the frequency offset using a selected change frequency.

13. A frequency offset correction method comprising the steps of:
changing a frequency of a baseband signal obtained from a received signal with change amounts which are different from each other;
executing frequency shift on a demodulated signal obtained from the baseband signal of which the frequency is changed for each of said change amounts, based on said change amounts;
obtaining an interpolation curve by multiplexing the demodulated signal subjected to the frequency shift, and executing interpolating processing on a multiplexed signal; and
calculating a frequency offset using said interpolation curve.
